# EUROPEAN PATENT SPECIFICATION

(11) **EP 0 541 702 B1**
(45) Date of publication and mention of the grant of the patent: **11.09.1996**
(21) Application number: 91915214.0
(22) Date of filing: 29.07.1991
(51) Int. Cl.: C08L 67/02, C08K 5/51

(54) **BLENDS OF POLY(ETHYLENE TEREPHTHALATE) AND POLY(ETHYLENE NAPHTHALENEDICARBOXYLATE) CONTAINING A PHOSPHOROUS STABILIZER**
MISCHUNGEN AUS POLYETHYLEN-TEREPHTHALAT UND POLYETHYLEN-NAPHTHALENDIKARBOXYLAT, DIE EINEN PHOSPHORSTABILISATOR ENTHALTEN
MELANGES DE POLY(ETHYLENE TEREPHTALATE) ET DE POLY(ETHYLENE NAPHTALENEDICARBOXYLATE) CONTENANT UN STABILISANT PHOSPHOREUX

(30) Priority: 30.07.1990 US 560650
(43) Date of publication of application: 19.05.1993
(73) Proprietor: EASTMAN CHEMICAL COMPANY, Kingsport, TN 37660 (US)
(72) Inventor: COX, Abraham James, c/o Eastman Kodak Co., Rochester, NY 14650-2201 (US); Stewart, Mark Edward, c/o Eastman Kodak Co., Rochester, NY 14650-2201 (US); SHEPHERD, Freddie, Allen, c/o Eastman Kodak Co., Rochester, NY 14650-2201 (US); Light, Ronald Richard c/o Eastman Kodak Co., Rochester, NY 14650-2201 (US)
(74) Representative: Behrens, Dieter, Dr.-Ing.
(86) International application number: US9105364
(87) International publication number: WO9202584

(56) References cited:
- EP-A- 0 172 115
- EP-A- 0 321 126
- RESEARCH DISCLOSURE, vol., 1988; Anonyme, pp. 714-719
- RESEARCH DISCLOSURE, vol., 1987; Anonyme, pp. 680-684

## Description

### Field of Invention

The present invention concerns a process for controlling the degree or amount of transesterification taking place during solid stating of poly(ethylene terephthalate)/poly(ethylene naphthalenedicarboxylate) blends to a desirable level by addition of a phosphorous stabilizer.

### Background of the Invention

Poly(ethylene naphthalenedicarboxylate) [PEN] in film or molded container form has barrier properties about five times that of poly(ethylene terephthalate) [PET]. Also, the relatively high glass transition temperature (Tg) of PEN makes it useful for hot-fill food and beverage applications where PET is not well suited. Because of the relatively high cost of PEN raw materials and the higher melting point and viscosity of PEN, the polymer is more expensive to use and process than PET. It is therefore desirable to achieve a material that is lower cost than PEN but that has better barrier and hot-fill properties than PET. Blends of PEN and PET are a way of achieving this. However, blending of two polymers often can result in opaque materials with incompatible phases. PEN and PET are similar in chemical composition and we have found that they will transesterify to the extent that clear material can be obtained. However. we have also found that when the level of equilibration (i.e., the level of transesterification) between the two polymers reaches very high levels, the crystallinity and resultant physical properties of the blend can be reduced to the point that they may be undesirable for making containers with good mechanical properties with many current processes. Also, we have unexpectedly found that transesterification occurs during solid-stating operations where the melt blended, crystallized polymer is held at temperatures below the melting point and subjected to an inert gas flow to raise the inherent viscosity (I.V.) and/or remove acetaldehyde. This transesterification is in addition to that occurring during melt blending and molding operations. Research Disclosures 28340 (November, 1987) and 29410 (October, 1988) disclose formation of clear containers and films from PET/PEN blends, but do not even mention solid stating or transesterification.

It has now been found that melt blends of PEN and PET having a desired level of transesterification can be prepared that are useful in film, sheeting and molded and melt blown container form.

### Summary of the Invention

The present invention is directed to a process to increase the inherent viscosity of and for controlling the amount of transesterification in a blend of poly(ethylene terephthalate) and poly(ethylene naphthalenedicarboxylate) during solid stating as defined in claim 1.

A polymer blend comprising
(i) 10 to 70 weight % of poly(ethylene terephthalate), and
(ii) 30 to 90 weight % of poly(ethylene naphthalenedicarboxylate), and

(B) 0.25 to 1 weight %, based on the weight of component (A), of a phosphorous stabilizer is preferred in the process of the present invention.

### Detailed Description of the Invention

It has been surprisingly discovered that, during solid stating, blends of PEN and PET undergo a significant degree of transesterification. In order to achieve a desired increase in inherent viscosity (I.V.) during solid stating and a desired reduction of acetaldehyde generation, we have found that the amount of transesterification which occurs concurrently is more than is desired for further processing and/or for typical end use applications.

We have found that for typical processes and end uses, a specific amount or level of transesterification is desired of PET/PEN blends.

Film, sheeting, including multilayer coextruded sheeting, and molded and melt blown containers such as those made by injection or extrusion blow molding, injection stretch blow molding, pipe extrusion and coinjection where the blend is either used as the barrier layer or the structural layer of a multilayer container can be made from melt blends that have been compounded, pelletized, crystallized and solid stated with an equilibration (transesterification) level that is about 5 to about 20%. The transesterification is measured by nuclear magnetic resonance spectroscopy (NMR) by determining the relative area in the NMR curves of the ethylene protons associated with naphthalene-dicarboxylate-ethylene glycol-terephthalate units compared to what would be found for a completely random copolymer made with naphthalenedicarboxylic acid, terephthalic acid, and ethylene glycol. The random copolymer would be considered to have 100% equilibration.

The 5 to 20% equilibrated blend can then be extruded into clear film or molded and melt blown into clear containers. The transesterification of the blend after these operations is less than about 30%. Containers such as 2-liter bottles prepared from blends of these polymers made in this manner have oxygen permeability values ranging from about 3.5 to less than about 1.75 cc mil/100 sq. in.-24 hr-atm (about 7.04 to less than about 3.52 mol/(m·s·Pa)) depending upon the amount of PEN in the blend. The PET container itself has an oxygen permeability value of about 5.5 cc mil/100 sq in.-24 hr-atm (11.06 mol/(m·s·Pa)).

When PET/PEN blends are subjected to solid stating (which is used to build up I.V. and to reduce acetaldehyde generation), the amount of transesterification is increased to undesirable levels, e.g., levels greater than about 20% (based on the theoretical maximum amount of transesterification being equal to 100%).

It has also been found that the use of many common metal deactivators and polymer stabilizers which are known to inhibit transesterification in many polymer blends are not effective in limiting transesterification during solid stating of PEN/PET blends. However, phosphorous stabilizers have unexpectedly been found to be effective in inhibiting transesterification reactions during solid-stating operations while still permitting a desired I.V. buildup rate.

The PEN and PET polymers useful in the blends of this invention can be readily prepared using typical polyester polycondensation reaction conditions known in the art. They may be made by either batch or continuous processes to the final I.V. value desired. Examples of methods which may be employed to prepare the PET and PEN useful in the present invention can be found in US-A-4,617,373.

Also, EP-A-172-115 refers to PET/PBT blends used in combination with phosphorous compounds. EP-A-321-126 refers to polymer blends comprising an aromatic component selected from the group consisting of (1) an aromatic component selected from the group consisting of polysulfone, polyarylsulfone, polyether ketone, polyester, ether ketone and polyarylate, wherein the polyarylate is the reaction product of at least one dihydric phenol and at least one aromatic dicarboxylic acid; (2) polyester being the reaction product of an aliphatic or cycloaliphatic diol, or mixtures thereof and at least one aromatic dicarboxylic acid; and (3) at least one thermoplastic polymer selected from the group consisting of an aromatic polycarbonate, a styrene resin, a vinyl chloride polymer, a poly(arylether), a copolyetherester block copolymer, and a polyhydroxyether. Also, the phosphorous compounds used in EP-A-321-126 are used in combination with a complete stabilizer system comprising: a phosphite component, a reactive functionally component selected from compounds having (1) imide or (2) oxazoline functionally; and optionally, a hindered phenol component.

Either or both of the PET and PEN polymers may optionally be modified with up to 15 mol %, preferably up to 10 mol %, of one or more different dicarboxylic acids (i.e., different than a naphthalenedicarboxylic acid isomer(s) in the case of PEN and terephthalic acid in the case of PET) containing 4 to 36 carbon atoms and/or one or more different glycols (i.e., different than ethylene glycol) containing 3 to 12 carbon atoms.

Typical modifying dicarboxylic acids for PEN include terephthalic, isophthalic, adipic, glutaric, azelaic, sebacic, fumaric and stilbenedicarboxylic acid and the like. Typical examples of modifying glycol for PEN include 1,4-butanediol, 1,6-hexanediol, 2,2-dimethyl-1,3-propanediol, 1,4-cyclohexanedimethanol, and the like. The PEN polymers are preferably derived from 2,6-naphthalenedicarboxylic acid but may be derived from 2,6-naphthalenedicarboxylic acid and also contain, optionally, up to about 25 mol % (preferably up to 15 mol %, most preferably up to 10 mol %) of one or more residues of different naphthalenedicarboxylic acid isomers such as the 1,2-, 1,3-, 1,4-, 1,5-, 1,6-, 1,7-, 1,8-, 2,3-, 2,4-, 2,5-, 2,7- or 2,8-isomers. PEN polymers based primarily on 1,4-, 1,5-, or 2,7-naphthalenedicarboxylic acid are also useful.

Typical modifying dicarboxylic acid for PET include isophthalic acid, adipic acid, glutaric acid, azelaic acid, sebacic acid, fumaric acid, stilbenedicarboxylic acid, biphenyldicarboxylic acid, any of the isomers of naphthalenedicarboxylic acid, and the like. Typical modifying glycols for PET include 1,4-butanediol, 1,6-hexanediol, 2,2-dimethyl-1,3-propanediol, 1,4-cyclohexanedimethanol, and the like.

The amount of PET in the blends (i.e., component (A)(i)) is preferably 30 to 60 weight %, more preferably 35 to 50 weight %. Accordingly, the amount of PEN in the blends (i.e., component (A)(ii)) is preferably 40 to 70 weight %, more preferably 50 to 65 weight %.

The phosphorus stabilizer used in the present invention is a stabilizer containing at least one phosphorus atom. Preferred phosphorous stabilizers are phosphites (especially diphosphites) and phosphonates. Representative examples of phosphorous stabilizers useful in this invention include:
phosphite compounds with structures such as 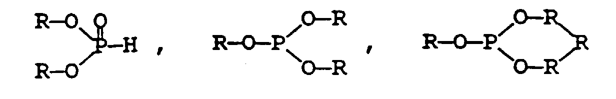 where R can be either alkyl or aryl groups or combinations of alkyl and aryl groups;
diphosphite compounds with structures such as 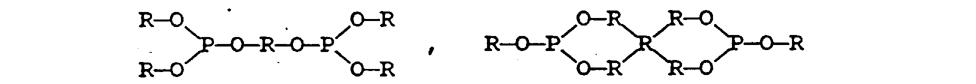 where R can be either alkyl or aryl groups or combinations of alkyl and aryl groups;
phosphonate compounds, often considered as derivatives of phosphonic acid, with structures such as 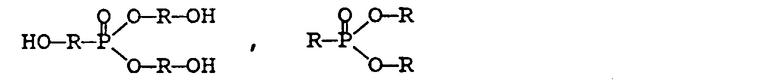 where R can be either alkyl or aryl groups or combinations of alkyl and aryl groups;
phosphate compounds or mixtures of phosphate compounds with structures such as 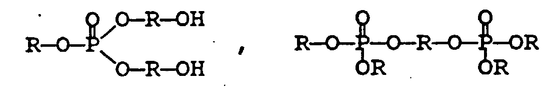 where R can be either alkyl or aryl groups or combinations of alkyl and aryl groups.

Additives particularly useful in this invention are pentaerythritol-based diphosphites such as 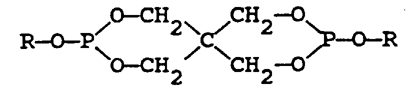 where R is either alkyl or aryl groups.

In the above-cited formulas the alkyl groups typically contain 1 to 36 carbon atoms and the aryl groups typically contain 6 to 15 carbon atoms.

The most preferred phosphorous stabilizers are bis (2,4-di-t-butylphenyl)pentaerythritol diphosphite, distearyl pentaerythritol diphosphite, or a mixture thereof.

The amount of phosphorus stabilizer used in the present invention is that amount effective to not allow the amount of transesterification of the PET/PEN blends during solid stating to exceed 20%, based on the theoretical maximum amount of transesterification being equal to 100%. This effective amount will be at least 0.25 weight %, based on the weight of the polymer blend (i.e., component (A)). Preferably, the effective amount will be between 0.25 and 1 weight %, and more preferably between about 0.5 and 1 weight %.

The solid stating procedure which results in transesterification of the PET/PEN blends can be any solid stating procedure commonly used in the polyester art to increase I.V. and/or reduce the amount of acetaldehyde generated. Basically, solid stating is a procedure wherein solid polymer is heated until the desired level of I.V. build-up is achieved and a means for removing glycol during heating is provided. The amount of heating is between the highest glass transition temperature (Tg) of the polymers present and the lowest melting temperature (Tm) of the polymers present. Typically, the temperature during solid stating is between 150°C and 250°C, preferably between 210°C and 250°C, and most preferably between 215°C and 230°C. The amount of I.V. build-up for typical solid stating is an increase of at least 5%, preferably at least 10%. Usually, no more than 50% increase in I.V. is desired, although higher build-up can be achieved in some cases.

The time required for typical solid stating will vary and at least 4 hours is typical. Usually, no more than 12 hours is desired.

Nitrogen flow or vacuum used during solid-state processing must be strong enough to remove ethylene glycol from the polymer, formed as a by-product of the condensation reaction of functional end groups of the polymer chains, faster than the reverse equilibration reaction can consume it.

As is readily apparent to a skilled artisan, all parameters for solid stating (such as time, temperature and chemical nature of polymer(s)) are interdependent and will be varied to accommodate a particular desired result.

The compositions produced according to the present invention are suited for hot-fill food and beverage packaging applications. The particular overall blend composition desired can be determined by the barrier and thermal properties needed for end use requirements.

The I.V.'s of polymers before solid stating are typically about 0.4 to about 0.8, more typically about 0.5 to about 0.6. The I.V.'s of polymers after solid stating are typically about 0.5 to about 1.0, more typically about 0.7 to about 0.8. I.V. can be determined in a 60/40 phenol/tetrachloroethane solution at 25°C at a concentration of 0.5 g/100 ml.

The following examples are to illustrate the invention but should not be interpreted as a limitation thereon.

### EXAMPLE 1 (comparative)

A pellet/pellet blend of 70% PEN (0.70 dL/g I.V.) and 30% PET (0.90 dL/g I.V.) is prepared by mixing pellets of the polymers together. The pellet/pellet blends is dried for about 16 hours at 150°C in a dehumidifying drier. The mixture is then extrusion compounded on a 1.5 in. (38.1 mm) MPM (trademark) extruder with all heating zone temperatures set at about 285°C. A mixing screw is used in the extruder and held at a speed of about 54 rpm for melt blending. The melt blended polymer has a hazy, opaque appearance and is stranded and pelletized. The level of transesterification of the blend as measured by NMR is less than about 5% and the I.V. value is about 0.69 dL/g as measured in a 60/40 phenol/tetrachloroethane mixture at 25°C. The melt blended material is then dried for more than 16 hours at 100-125°C and extruded on a 0.75 in. (19.1 mm) Brabender (trademark) extruder equipped with a mixing screw and a film die. The temperature settings for all heating zones are set at about 300°C. The screw is varied from about 40 to about 80 rpm. When the screw speed and melt feed from the die are varied to produce 0.254-0.305 mm (10-12 mil) film, the film is hazy. When varied to produce about 0.127 mm (5 mil) film, the film is clear, NMR analyses show that the hazy film has a level of transesterification less than about 7% and the clear film has a level of from about 10 to about 12%. This example demonstrates that a melt blend of PEN and PET can be prepared and subsequently be processed and transesterified into a clear material.

### EXAMPLE 2 (comparative)

A pellet/pellet 70% PEN (0.70 dL/g I.V.)/30% PET (0.90 dL/g I.V.) is dried for about 16 hours at about 150°C in a dehumidifying dryer and is extruded on a 0.75 in. (19.1 mm) Brabender extruder with all heating zones set at 305°C using a mixing screw and a screw speed of about 90 rpm which results in about a 1.5 to 2 min average residence time. The extrudate is clear. The I.V. value is 0.68 dL/g and the blend has a 10.5% level of transesterification as measured by NMR. Differential scanning calorimetry (DSC) curves show a very broad transition from about 50 to about 125°C which may be a glass transition (Tg), a crystallization on heating peak of 222°C and a melting point (Tm) of 258°C on the first heating cycle (20°C/min). When quenched after the first heating cycle and rescanned to about 300°C, only a Tg of 111°C is found. A portion of this material is crystallized for about 40 min in a forced-air oven at 180°C. The crystallized pellets are placed in a glass laboratory solid-state polymerization apparatus. The apparatus consists of a cylinder, open to air at the top, about 40 mm in diameter and 40 cm long with a coarse sintered disc at the bottom that is connected to a gas source with 10 mm (OD) glass tubing. This portion of the unit is surrounded by essentially a distillation column of approximately 80 mm outside diameter and 69 cm long with a 34/54 standard-taper ground glass joint at the bottom which is attached to a flask for boiling solvent. An arm that extends from the top of the column has a 24/40 standard-taper ground glass joint that is attached to a reflux condenser. Solvent is boiled in the flask attached to the bottom of the unit and allowed to reflux in the column to provide a heat source for the pellets. The unit is heated to about 230°C by a decyl alcohol reflux around the jacketed inside cylinder which holds the pellets. The pellets are subjected to a N₂ flow of four standard cubic feed per hour (SCFH) through the sintered disc. The I.V. value of the blend increases to about 0.90 dL/g after 8 hours, but transesterification also increases to about a 38% level. DSC curves show a Tm of 252°C on the first heating scan and only a Tg value of 110°C on the second scan. This example demonstrates that while the I.V. of a blend is significantly increased during solid phasing, an increase in transesterification also occurs which could reach an undesirable level.

### EXAMPLE 3 (comparative)

Powder/powder (< 0.59 mm (30 U.S. mesh)) blends of 49.75% PEN 10533 -(0.70 dL/g I.V.)/49.75% PET 10388 (0.90 dL/g I.V.) containing 0.5% of a stabilizer/metal deactivator are prepared using 0.5% each of the following stabilizer systems:
I. * bis(2,4-di-t-butylphenyl) pentaerythritol diphosphite (sold by G. E. Specialty Chemicals as Ultranox (trademark) 626).
II. * distearyl pentaerythritol diphosphite (sold by G. E. Specialty Chemicals as Weston (trademark) 619).
III. N,N'-bis(beta-3,5-di-t-butyl-4-hydroxyphenylpropiono) hydrazide (sold by Ciba-Geigy as Irganox (trademark) MD 1024).
IV. 2,2' oxamido bis-[ethyl 3-(3,5-di-t-butyl-4-hydroxyphen)propionate] (sold by Uniroyal as Naugard (trademark) XL-1).
V. *A combination consisting of 0.25% each of I and III.

* Stabilizers useful in the process according to the present invention

The materials are dried for about 16 hours in a dehumidifying dryer at about 150°C and then melt blended on a 0.75 in. (19.1 mm) Brabender extruder with all heating zones set at 305°C using a mixing screw and a screw speed of about 90 rpm followed by pelletization. The pellets are redried and extruded at the same conditions two additional times. During each extrusion step, the level of transesterification increases from about 7% to about 12% after the first pass to about 23% to about 27% on the third pass. The blends with the stabilizers are not significantly different than a PEN/50% PET control processed under the same conditions (see Table 1). Transesterification was determined by NMR; standard deviation is ±1.5% of the reported value. A random copolymer would be considered to have 100% transesterification. This example demonstrates that stabilizers commonly used for metal deactivation do not significantly alter transesterification reactions of PEN/PET blends during melt blending.

### EXAMPLE 4

Blends of PEN/PET are prepared with selected stabilizers from those given in Example 3 and melt blended in the same manner at 305°C by extruding one time on the Brabender extruder. The pelletized melt blends are then crystallized and solid stated at 230°C in a similar manner as that given in Example 2.

The transesterification rates of only the samples containing phosphite based stabilizers are significantly lower than those for the control. The I.V. buildup rates of the blends containing the phosphite stabilizers are generally the same as that of a control blend (see Table 2). This example demonstrates that phosphite compounds can be used in PEN/PET blends to hinder transesterification reactions during solid stating while still allowing an acceptable I.V. buildup rate.

### EXAMPLE 5 (comparative)

Two pellet/pellet blends of 65% PEN (0.70 dL/g I.V.)/35% PET (0.90 dL/I.V.) are dried for about 16 hours in a dehumidifying dryer at about 150°C. The pellet/pellet blends are then melt blended on a 1.5 in. (38.1 mm) Sterling (trademark) extruder with a mixing screw at a screw speed of about 20 rpm. One blend is made with barrel temperature settings of about 305°C and one with barrel temperature settings of about 295°C. The blend made at about 305°C has an I.V. value of about 0.71 dL/g and a transesterification level of about 14% and is clear. The blend made at about 295°C has an I.V. value of about 0.67 dL/g and a transesterification level of about 7% and is hazy. Both are molded into 0.5 liter bottle preforms on a Cincinnati Milacron (trademark) preform injection molding machine using heating settings of about 308°C, boost pressures of about 1,600 psig (gauge pressure of 11,031.61 kPa), hold pressures of about 1,000 psig (gauge pressure of 6,894.76 kPa) and back pressures of about 200 psig (gauge pressure of 1,378.95 kPa). Both blends are molded into clear preforms. The blend with 14% initial transesterification and I.V. of 0.71 dL/g has a preform transesterification level of about 30% and an I.V. value of about 0.64 dL/g. The blend with 7% initial transesterification and I.V. of 0.67 dL/g has a preform transesterification level of about 24% and I.V. value of about 0.62 dL/g. The clear preforms of both blends are then made into clear bottles using a reheat blowing apparatus.

Similar results are obtained when a 50% PEN/50% PET blend is prepared on a Sterling extruder with a transesterification level of about 8% and I.V. of about 0.68 dL/g. This example demonstrates that blends with relatively low initial levels of transesterification when molded will undergo additional equilibration and can be used to produce clear preforms and bottles.

### EXAMPLE 6 (comparative)

A pellet/pellet blend of 65% PEN (about 0.76 dL/g I.V.) and 35% PET with about 3.5 mol % cyclohexane dimethanol modification is prepared by mixing pellets of the polymers together. The pellet/pellet blend is dried for about 16 hours at 150°C in a dehumidifying dryer. The mixture is then extrusion compounded on a 0.75 in. (19.1 mm) Brabender extruder equipped with a mixing screw. The set point temperatures for all heating zones are set to 305°C. The screw speed is set to about 90 rpm. The extruded material has a hazy opaque appearance and is chopped into pellets. The I.V. of the material is about 0.65 dL/g and the transesterification level is approximately 8%. The pellets are then dried and extruded using the same equipment and approximately the same conditions as for the first drying and extrusion described above. The extruded material is pelletized and collected. The I.V. of the material is about 0.59 dL/g and the transesterification level is about 18%. The pellets are clear. This example demonstrates that a clear melt blend can be prepared from a blend containing PEN and a glycol modified PET.

### EXAMPLE 7 (comparative)

A blend of 50 wt % PET (with an I.V. of about 0.90 dL/g) and 50 wt % of a PEN (with an I.V. of about 0.90 dL/g) containing about 70 ppm of a copper phthaloycyanine blue pigment and about 125 ppm of a methine dye such as those described in US-A-4 617, 373, copolymerized in the PEN is prepared by mixing granules of the PEN polymer with pellets of the PET polymer. The blend is then dried for about 16 hours at about 150°C in a dehumidifying dryer. The mixture is then extrusion compounded using a 0.75 in. (19.1 mm) Brabender extruder equipped with a mixing screw.

The set point temperature for all heating zones are set to 305°C. The screw speed is maintained at about 90 rpm. The extruded material is collected and chopped into pellets. The material is clear green and has an I.V. of about 0.78 dL/g. The transesterification level of the blend is about 13%.

### EXAMPLE 8 (comparative)

A blend of 65 wt % PEN (with an I.V. of about 0.70 dL/g) and 35 wt % of an amber PET (with an I.V. of about 0.70 dL/g) containing about 60 ppm of a copper phthaloycyanine blue pigment, about 300 ppm of a red copolymerized anthraquinone dye such as those described in US-A-4,359,570, and about 1200 ppm of yellow copolymerized anthraquinone dye such as those also described in US-A-4,359,570 is prepared by mixing pellets of the two polymers. The blend is then dried for about 16 hours at about 150°C in a dehumidifying dryer. The mixture is then extrusion compounded using a 0.75 in. (19.1 mm) Brabender extruder equipped with a mixing screw. The set-point temperature for all heating zones are set to 305°C and the screw speed is maintained at about 90 rpm. The extruded material is collected and chopped into pellets. The material is clear amber and has an I.V. of about 0.56 dL/g. The equilibration level is about 11%. These examples (7 & 8) demonstrate that clear colored materials can be produced from blends of PET and PEN with colorant copolymerized into the backbone of either of the polymers and in the presence of unreacted dyes.

### EXAMPLE 9 (comparative)

Pellet/pellet blends of PEN (0.70 dL/g I.V.) and PET (0.70 dL/g I.V.) are made containing 50, 60, and 80% PEN. The Ti catalyst level in the PET used in the blends is 0, 20, and 40 ppm. The pellet blends are dried and extruded three times on a 0.75 in. (19.1 mm) Brabender extruder in a manner like that given in Example 3 except that extrusion temperatures of 295, 305, and 315°C are used. The % transesterification was determined by NMR. The blends prepared at 295°C with one extrusion blending (about 1.5 to 2 min) are generally below about 8.5% and appear hazy. At the 305°C extrusion temperature, all blends with 80% PEN are clear and equilibration levels are generally above about 10%. Blends with 50 and 65% PEN generally appear to contain some haze and generally have equilibration levels below about 9%. All blends have more than about 10% equilibration when extruded once at 315°C or more than once at 295-305°C (see Table 3). The level of Ti contained in the polymers does not appear to have a major effect on equilibration. When the equilibration results are averaged for these blends at each processing temperature, the results show that the equilibration and thus the clarity of the blends is mainly a function of extrusion time and temperature.

Similar results are seen when Ti is the only catalyst used in either the PEN or PET polymers. This example demonstrates that Ti levels in PET or PEN have little effect on transesterification during melt blending and that the level of equilibration and clarity are dependent mainly upon compounding time and temperature.

### EXAMPLE 10

Pellet/pellet blends of 50% PEN and 50% PET are prepared using the following materials:
I. * 50% PET 7741 which is a -0.60 dL/g I.V. meltphase prepared PET which has not been solid stated; 50% PEN 11605 which is a melt-phased prepared PEN of about 0.60 dL/g I.V. that has not been solid stated. For this work both polymers are crystallized by heating in a tumbling dryer at 100-200°C.
II. 47.75% PET 7741, 49.75% PEN 11605 and 2.5% of a PET/20% Ultranox 626 phosphite concentrate. The concentrate is prepared by melt blending PET of about 0.90 dL/g I.V. with Ultranox 626 (see Example 3, Part I for the chemical name for Ultranox 626). The resulting blend would then contain 49.75% PET/49.75%/0.5% Ultranox 626. The PET and PEN samples are crystallized as above.
III. * 50% PET 10388 which is a melt-phased prepared PET solid stated to an I.V. of about 0.90 dL/g; 50% PEN 10533 which is a melt-phased prepared PEN solid stated to an I.V. of about 0.70 dL/g. .
IV. 47.75% PET 10388, 49.75% PEN 11605 and 2.5% of PET/20% Ultranox 626 concentrate. The resulting blend would then contain 49.75% PET/49.75% PEN/0.5% Ultranox 626.

* comparison

The above blends are dried for about 16 hours in a dehumidifying dryer at about 150°C and then melt blended on a MPM extruder with heating zones set at 285-290°C. The I.V. values were 0.57 and 0.55 dL/g for blends I and II respectively and 0.72 and 0.69 dL/g for blends III and IV respectively. Transesterification levels range from 6-8% for blends I and II to essentially none for blends III and IV.

The blends are crystallized in a tumbling dryer at about 150°C for about 16 hours and are then solid stated in a fluidized bed unit at 230°C with nitrogen. Blends I and II are solid-state processed in this manner for about 8 hours until I.V. values of about 0.70 dL/g are obtained. Blends III and IV are solid stated for about 6 hours and I.V. values of 0.75-0.83 are reached. Transesterification levels after solid stating of 7-10% are reached for the blends with the Ultranox 626 (blends II and IV), compared to 14-18% for blends not containing the phosphite (blends I and III).

Clear preforms of the blends are molded on a Cincinnati Milacron machine at 295-300°C. Preform I.V. values are 0.67-0.68 dL/g for those molded from blends I and II and 0.70-0.76 dL/g for those molded from blends III and IV. Transesterification of preforms from blends with the phosphite (II and IV) are 14-16% while those from blends without the phosphite (I and III) are 23-26% (See Table 4 for data). This example demonstrates how a stabilizer such as a phosphite can be used to hinder transesterification during solid stating while allowing I.V. buildup and thus allow molding of bottle preforms from PET/PEN blends with lower total transesterification.

### EXAMPLE 11

Samples of melt blends like those prepared in Example 10 were heated in a heating block at 285, 295 and 305°C for 5 min. and then analyzed for acetaldehyde (AA) by gas chromatography. The melt blends of the melt-phased based polymers (Example 10; I and II) have AA levels up to about 43 ppm before solid stating and less than about 22 ppm after solid stating. Melt blends of the solid-phased based polymers (Example 10; III and IV) have AA levels of up to about 25 ppm before solid stating less than about 20 ppm after solid stating. In general, blends containing Ultranox phosphite (Example 10; II and IV) have about 30% less AA than blends without phosphite (see Table 5 for data). This example demonstrates the reduced level of AA generated for blends that are solid stated after melt blending and the effect of a phosphite stabilizer on AA generation.

### EXAMPLE 12 (comparative)

Two liter containers are blown from clear molded (Cincinnati Milacron machine) preforms of 50% PEN/50% PET blends on a reheat blow molding unit typically using reheat times of 55 to 150 seconds, pressures of 40 to 60 psi (275.79 to 413.69 kPa), blow times of 5 seconds, high blow pressures of 220 psi (1,516.85 kPa) and preform temperatures of 120 to 150°C. One preform has a transesterification level of about 17% and the other about 23%. When filled with water at 185°F (85°C), the bottle with 23% transesterification has shrinkage of about 9% while the bottle with 17% transesterification has About 4% shrinkage. This example demonstrates the importance df limiting transesterification, generally to levels below 20%, in order to reduce hot-fill shrinkage as much as possible.

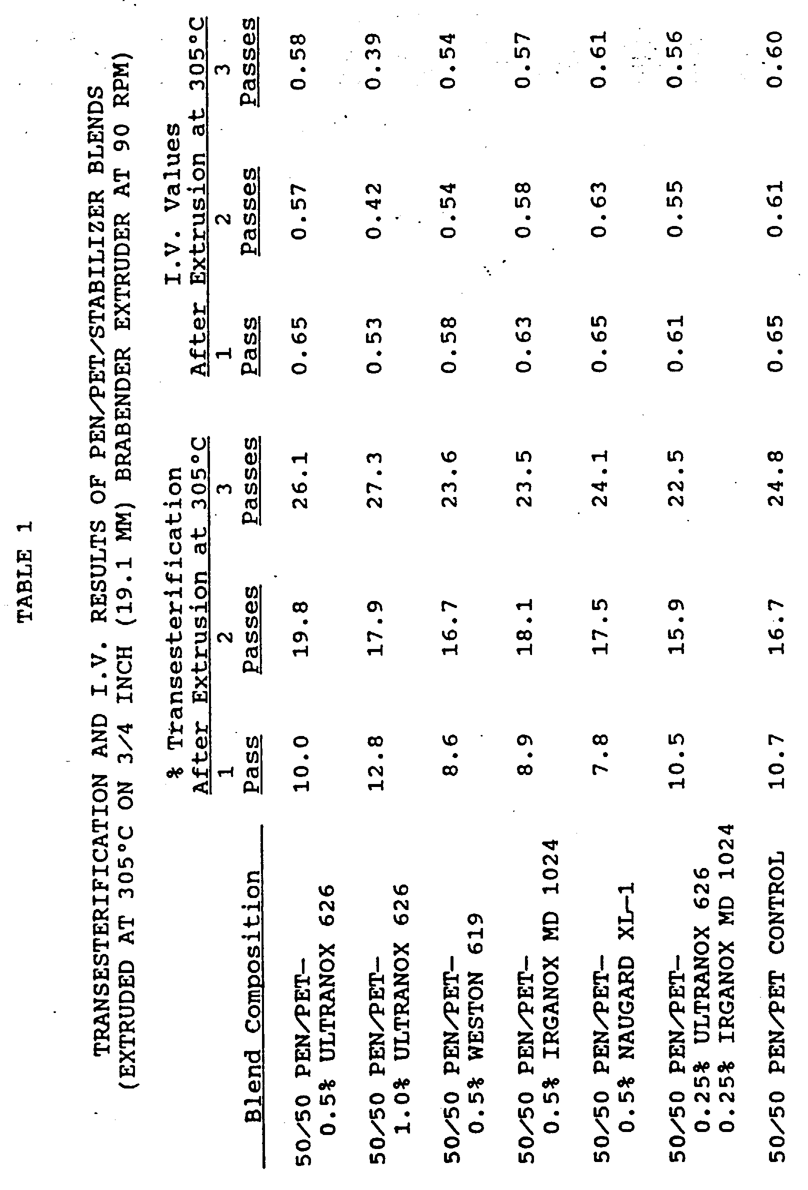

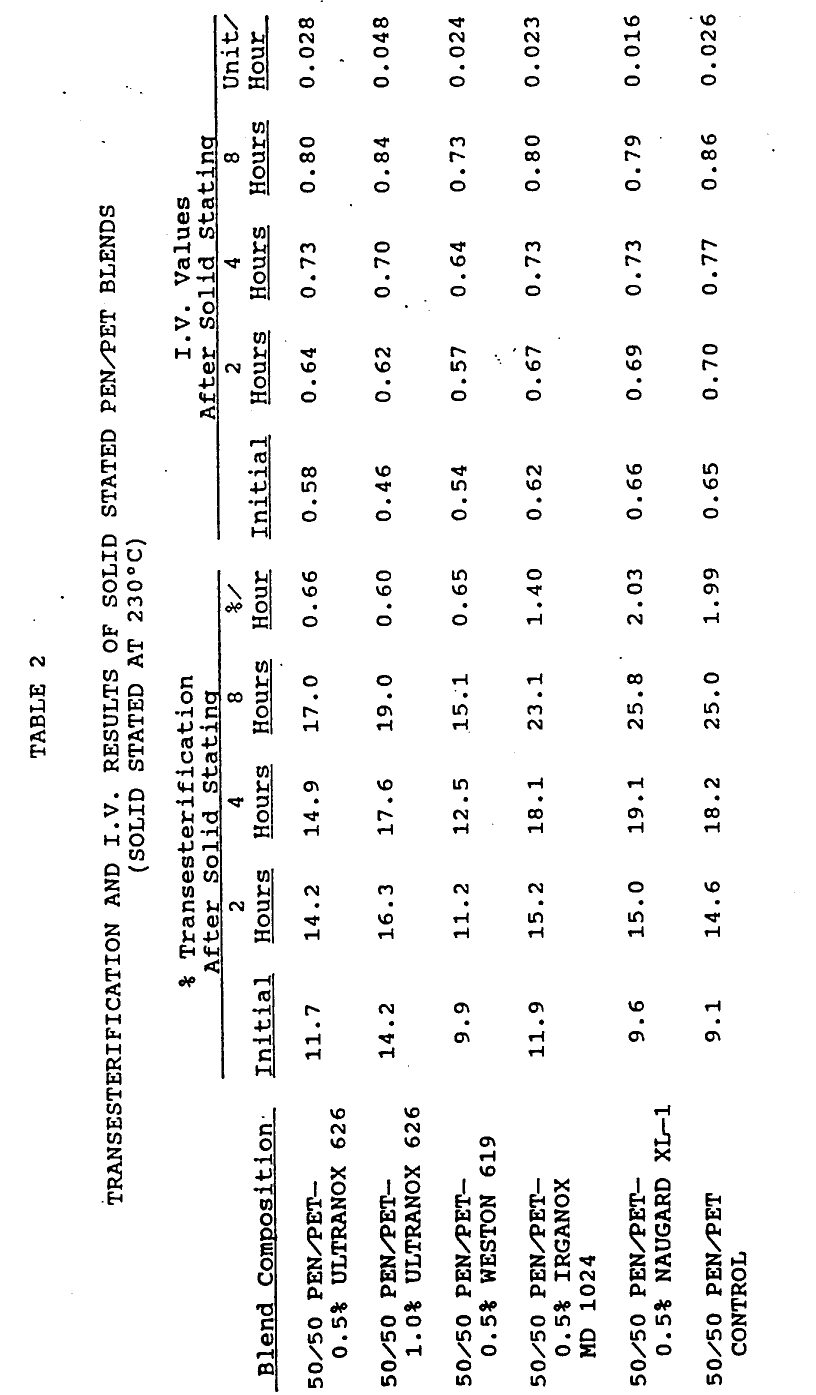

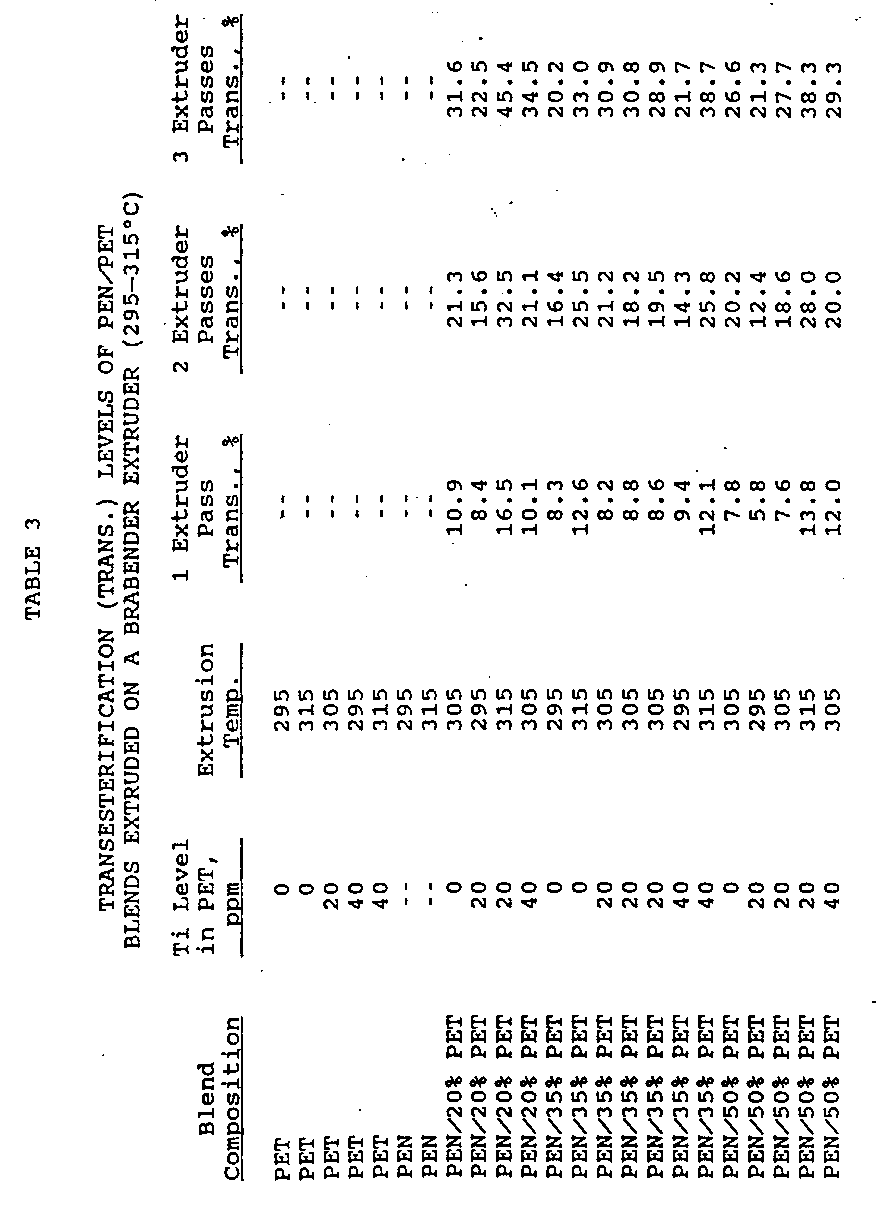

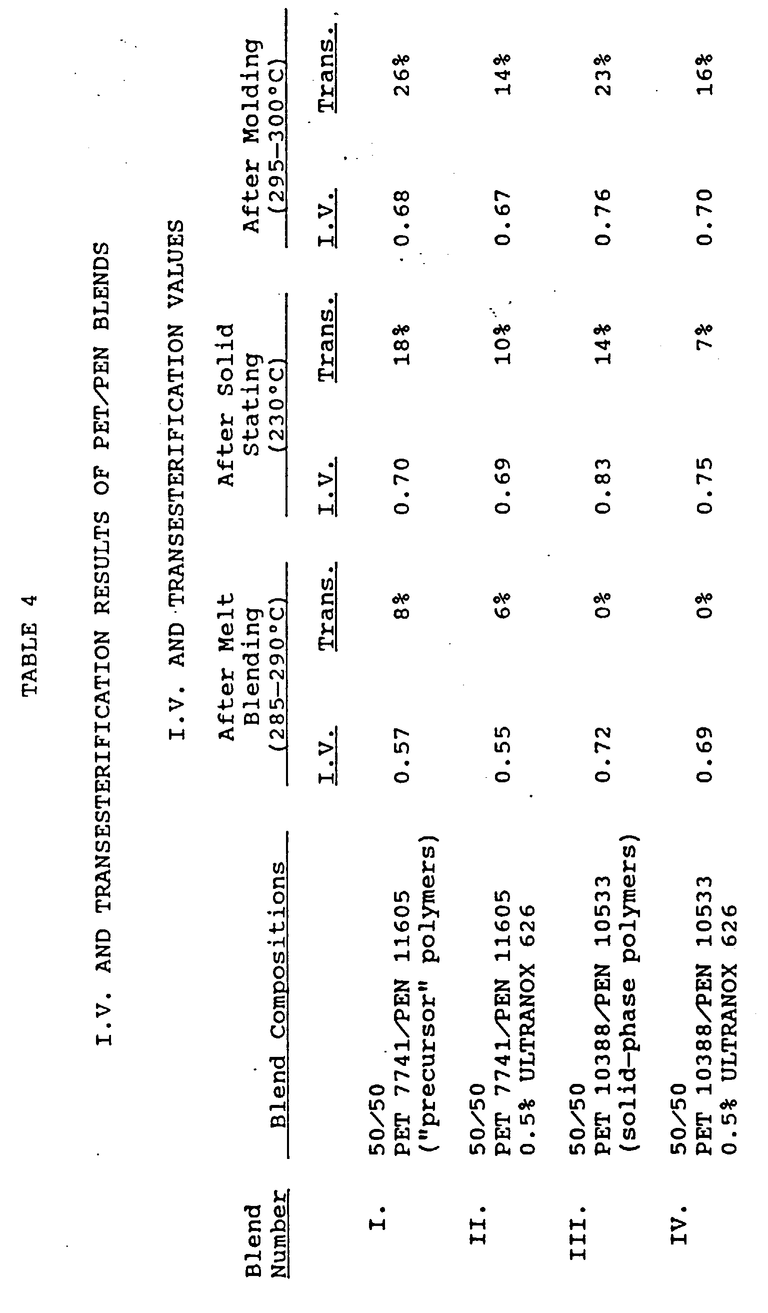

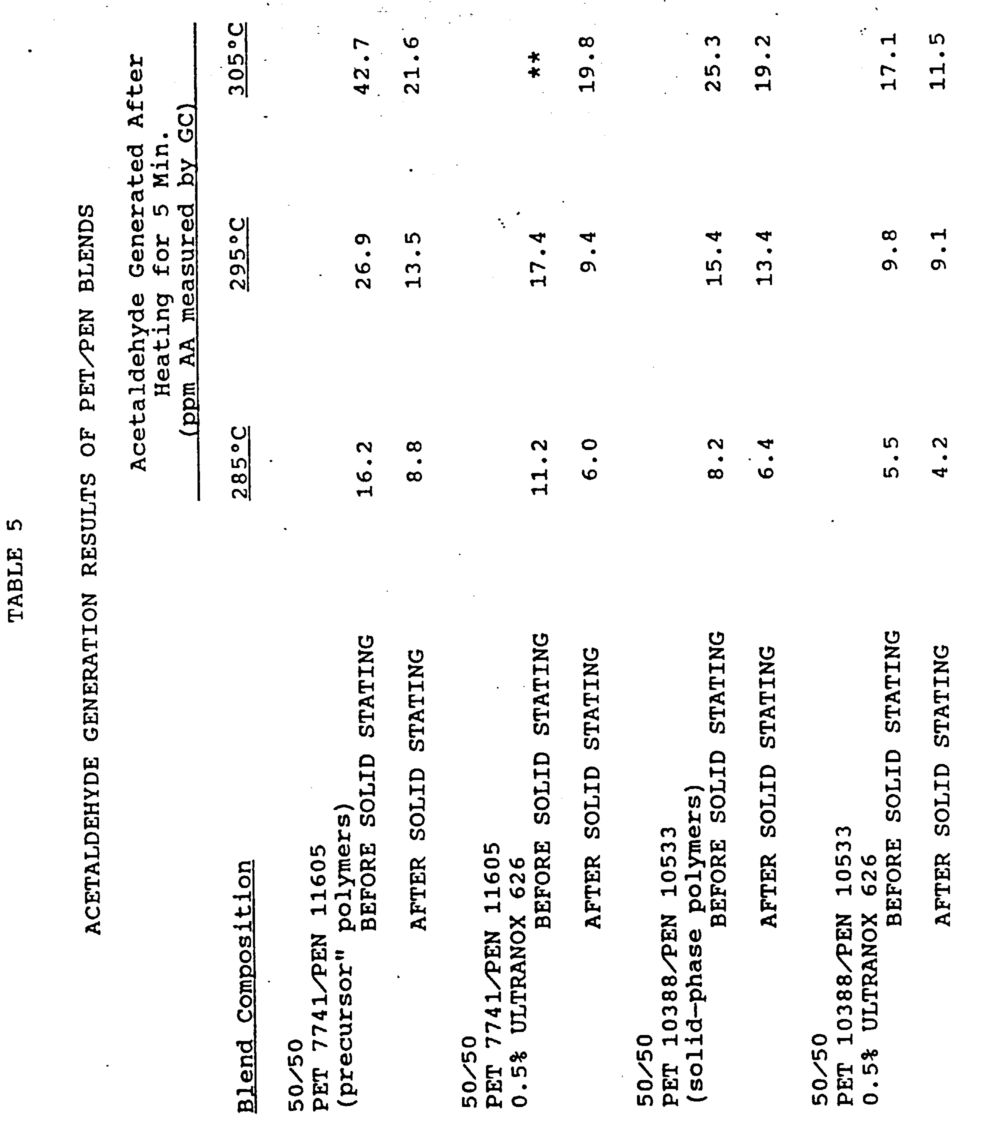

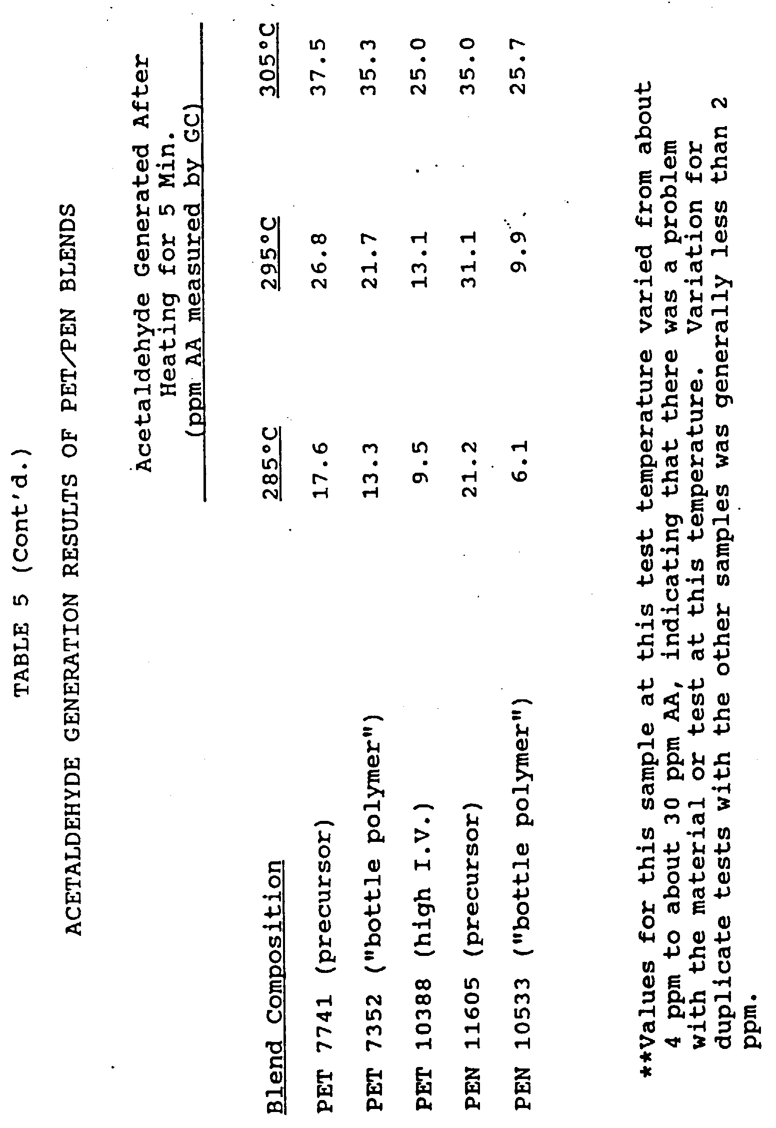

## Claims

1. A process to increase the inherent viscosity of and for controlling the amount of transesterification in a blend of poly(ethylene terephthalate) and poly(ethylene naphthalene dicarboxylate) comprising the following features:
i) the solid polymer blend of poly(ethylene terephthalate) and poly(ethylene naphthalate dicarboxylate) is heated between the highest glass transition temperature (T_{g}) of the polymers present and the lowest melting temperature (Tₘ) of the polymers present, and
ii) the blend is heated in the presence of at least 0.25 weight % of a phosphorous transesterification stabilizer, based on the weight of the polymer blend.

2. The process of Claim 1 wherein said blend comprises 10 to 70 weight % of poly(ethylene terephthalate) and 30 to 90 weight % of poly(ethylene naphthalenedicarboxylate).

3. The process of Claim 1 wherein said blend comprises 30 to 60 weight % of poly(ethylene terephthalate) and 40 to 70 weight % of poly(ethylene naphthalenedicarboxylate).

4. The process of Claim 1 wherein said blend comprises 35 to 50 weight % of poly(ethylene terephthalate) and 50 to 65 weight % of poly(ethylene naphthalenedicarboxylate).

5. The process of Claim 1 wherein the amount of transesterification is controlled to be 20% or less, based on the theoretical maximum amount of esterification being 100%.

6. The process of Claim 1 wherein the amount of transesterification is controlled to be between 10% and 20%, based pn the theoretical maximum amount of esterification being 100%.

7. The process of Claim 1 wherein the effective amount of said phosphorous stabilizer is 0.25 to 1 weight % of the blend.

8. The process of Claim 1 wherein said poly(ethylene naphthalenedicarboxylate) is derived from 2,6-naphthalenedicarboxylic acid and optionally contains up to 25 mol % of one or more residues of different naphthalenedicarboxylic acid isomers.

9. The process of Claim 8 wherein either or both of said poly(ethylene terephthalate) and said poly(ethylene naphthalenedicarboxylate) is modified with up to 15 mol % of one or more different dicarboxylic acids containing 4 to 36 carbon atoms, one or more different glycols containing 3 to 12 carbon atoms, or a mixture of said one or more of different dicarboxylic acid and said one or more different glycols.

10. The process of Claim 9 wherein said poly(ethylene terephthalate) is modified with up to 10 mol % of one or more different glycols, different dicarboxylic acids or a mixture thereof selected from the group consisting of isophthalic acid, adipic acid, glutaric acid, azelaic acid, sebacic acid, fumaric acid, stilbenedicarboxylic acid, biphenyldicarboxylic acid, naphthalenedicarboxylic acid, 1,4-butanediol, 1,6-hexanediol, 2,2-dimethyl-1,3 propanediol, or 1,4-cyclohexanedimethanol ; and said poly(ethylene 2,6-naphthalenedicarboxylate) is modified with up to 10 mol % of one or more different glycols, one or more different dicarboxylic acids, or a mixture thereof selected from the group consisting of terephthalic acid, isophthalic acid, adipic acid, glutaric acid, azelaic acid, sebacic acid, fumaric acid, stilbenedicarboxylic acid, 1,4-butanediol, 1,6-hexanediol, 2,2-dimethyl-1,3-propanediol, and 1,4-cyclohexanedimethanol.

11. The process of Claim 1 wherein said solid stating is carried out at a temperature of at least 150°C for at least 4 hours such that the inherent viscosity of at least one of the poly(ethylene terephthalate) or poly(ethylene naphthalenedicarboxylate) is increased at least 5%.

12. The process of Claim 1 wherein said solid stating is carried out at a temperature of at least 210°C to 250°C for 4 hours to 12 hours such that the inherent viscosity of at least one of the poly(ethylene terephthalate) or poly(ethylene naphthalenedicarboxylate) is increased at least 10%.

13. The process of Claim 1 wherein said solid stating is carried out at a temperature of 215°C to 230°C.

14. The process of Claim 1 wherein said phosphorous stabilizer is a phosphite, a diphosphite, a phosphonate, or a phosphate compound.

15. The process of Claim 1 wherein said phosphorous stabilizer is a pentaerythritol diphosphite compound.

16. The process of Claim 1 wherein said phosphorous stabilizer is bis(2,4-di-t-butylphenyl)pentaerythritol diphosphite, distearyl pentaerythritol diphosphite, or a mixture thereof.

## Patentansprüche

1. Verfahren zum Erhöhen der inhärenten Viskosität von und zum Steuern des Ausmaßes der Umesterung in einer Mischung aus Polyethylenterephthalat und Polyethylennaphthalindicarboxylat, umfassend die folgenden Kennzeichen:
(i) die feste Polymermischung aus Polyethylenterephthalat und Polyethylennaphthalindicarboxylat wird auf eine Temperatur zwischen der höchsten Glasübergangstemperatur (Tg) der vorliegenden Polymere und der niedrigsten Schmelztemperatur (Tm) der vorliegenden Polymere erwärmt, und
(ii) die Mischung wird in Gegenwart von mindestens 0,25 Gew.-% eines Phosphor-Umesterungsstabilisators, bezogen auf das Gewicht der Polymermischung, erwärmt.

2. Verfahren nach Anspruch 1, worin die Mischung 10 bis 70 Gew.-% Polyethylenterephthalat und 30 bis 90 Gew.-% an Polyethylennaphthalindicarboxylat enthält.

3. Verfahren nach Anspruch 1, worin die Mischung 30 bis 60 Gew.-% Polyethylenterephthalat und 40 bis 70 Gew.-% Polyethylennaphthalindicarboxylat enthält.

4. Verfahren nach Anpruch 1, worin die Mischung 35 bis 50 Gew.-% Polyethylenterephthalat und 50 bis 65 Gew.-% Polyethylennaphthalindicarboxylat enthält.

5. Verfahren nach Anspruch 1, worin der Umesterungsgrad so gesteuert wird, daß er 20 % oder weniger, bezogen auf den theoretischen maximalen Veresterungsgrad von 100 %, beträgt.

6. Verfahren nach Anspruch 1, worin der Umesterungsgrad so gesteuert wird, daß er zwischen 10 % und 20 %, bezogen auf den theoretischen maximalen Veresterungsgrad von 100 %, liegt.

7. Verfahren nach Anspruch 1, worin die wirksame Menge des Phosphorstabilisators 0,25 bis 1 Gew.-% der Mischung ausmacht.

8. Verfahren nach Anspruch 1, worin das Polyethylennaphthalindicarboxylat von 2,6-Naphthalindicarbonsäure abgeleitet ist und wahlweise bis zu 25 Mol-% von einem oder mehreren Resten unterschiedlicher Naphthalindicarbonsäure-Isomere enthält.

9. Verfahren nach Anpruch 8, worin eines oder beide von Polyethylenterephthalat und Polyethylennaphthalindicarboxylat mit bis zu 15 Vol.-% von einer oder mehreren unterschiedlichen Dicarbonsäuren mit 4 bis 36 Kohlenstoffatomen, einem oder mehreren unterschiedlichen Glykolen mit 3 bis 12 Kohlenstoffatomen oder einer Mischung von einer oder mehreren unterschiedlichen Dicarbonsäuren und einem oder mehreren unterschiedlichen Glykolen modifiziert sind.

10. Verfahren nach Anspruch 9, worin das Polyethylenterephthalat mit bis zu 10 Mol-% von einem oder mehreren unterschiedlichen Glykolen, unterschiedlichen Dicarbonsäuren oder einer Mischung davon, gewählt aus der Isophthalsäure, Adipinsäure, Glutarsäure, Azelainsäure, Sebacinsäure, Fumarsäure, Stilbendicarbonsäure, Biphenyldicarbonsäure, Naphthalindicarbonsäure, 1,4-Butandiol, 1,6-Hexandiol, 2,2-Dimethyl-1,3-propandiol oder 1,4-Cyclohexandimethanol umfassenden Gruppe, modifiziert ist; und das Polyethylen-2,6-naphthalindicarboxylat mit bis zu 10 Mol-% von einem oder mehreren unterschiedlichen Glykolen, einer oder mehreren unterschiedlichen Dicarbonsäuren oder einer Mischung davon, gewählt aus der Terephthalsäure, Isophthalsäure, Adipinsäure, Glutarsäure, Azelainsäure, Sebacinsäure, Fumarsäure, Stilbendicarbonsäure, 1,4-Butandiol, 1,6-Hexandiol, 2,2-Dimethyl-1,3-propandiol und 1,4-Cyclohexandimethanol umfassenden Gruppe, modifiziert ist.

11. Verfahren nach Anspruch 1, bei dem das Umsetzen im festen Zustand bei einer Temperatur von mindestens 150°C mindestens 4 Stunden lang so durchgeführt wird, daß die inhärente Viskosität von mindestens einem des Polyethylenterephthalats oder des Polyethylennaphthalindicarboxylats mindestens um 5 % erhöht wird.

12. Verfahren nach Anspruch 1, bei dem das Umsetzen im festen Zustand bei einer Temperatur von mindestens 210°C bis 250°C 4 Stunden bis 12 Stunden lang so durchgeführt wird, daß die inhärente Viskosität von mindestens einem des Polyethylenterephthalats oder des Polyethylennaphthalindicarboxylats mindestens um 10 % erhöht wird.

13. Verfahren nach Anspruch 1, bei dem das Umsetzen im festen Zustand bei einer Temperatur von 215°C bis 230°C durchgeführt wird.

14. Verfahren nach Anspruch 1, bei dem der Phosphorstabilisator eine Phosphit-, eine Diphosphit-, eine Phosphonat- oder eine Phosphatverbindung ist.

15. Verfahren nach Anspruch 1, bei dem der Phosphorstabilisator eine Pentaerythritoldiphosphitverbindung ist.

16. Verfahren nach Anspruch 1, bei dem der Phosphorstabilisator Bis(2,4-di-t-butylphenyl)pentaerythritoldiphosphit, Distearylpentaerythritoldiphosphit oder eine Mischung aus diesen ist.

## Revendications

1. Procédé d'accroissement de la viscosité inhérente d'un mélange de poly(téréphtalate d'éthylène) et de poly(naphtalènedicarboxylate d'éthylène) et de contrôle de la quantité de transestérification dans celui-ci, comprenant les caractéristiques suivantes :
i) le mélange polymère solide de poly(téréphtalate d'éthylène) et de poly(naphtalatedicarboxylate d'éthylène) est chauffé entre la température de transition vitreuse (Tg) la plus élevée des polymères présents et la température de fusion (Tm) la moins élevée des polymères présents et
ii) le mélange est chauffé en présence d'au moins 0,25 % en masse d'un stabilisateur phosphoreux de transestérification par rapport à la masse du mélange de polymères.

2. Procédé selon la revendication 1, dans lequel ledit mélange comprend de 10 à 70 % en masse de poly(téréphtalate d'éthylène) et de 30 à 90 % en masse de poly(naphtalènedicarboxylate d'éthylène).

3. Procédé selon la revendication 1, dans lequel ledit mélange comprend de 30 à 60 % en masse de poly(téréphtalate d'éthylène) et de 40 à 70 % en masse de poly(naphtalènedicarboxylate d'éthylène).

4. Procédé selon la revendication 1, dans lequel ledit mélange comprend de 35 à 50 % en masse de poly(téréphtalate d'éthylène) et de 50 à 65 % en masse de poly(naphtalènedicarboxylate d'éthylène).

5. Procédé selon la revendication 1, dans lequel la quantité de transestérification est contrôlée pour qu'elle soit inférieure ou égale à 20 % par rapport à la quantité maximale théorique de l'estérification égale à 100 %.

6. Procédé selon la revendication 1, dans lequel la quantité de transestérification est contrôlée pour qu'elle soit comprise entre 10 % et 20 % par rapport à la quantité maximale théorique d'estérification égale à 100 %.

7. Procédé selon la revendication 1, dans lequel la quantité efficace dudit stabilisateur phosphoreux est comprise entre 0,25 et 1% en masse du mélange.

8. Procédé selon la revendication 1, dans lequel ledit poly(naphtalènedicarboxylate d'éthylène) provient de l'acide 2,6-naphtalènedicarboxylique et contient éventuellement jusqu'à 25 % en moles d'un ou plusieurs résidus de différents isomères d'acide naphtalènedicarboxylique.

9. Procédé selon la revendication 8, dans lequel ledit poly(téréphtalate d'éthylène) ou ledit poly(naphtalènedicarboxylate d'éthylène) ou les deux sont modifiés avec jusqu'à environ 15 % en moles d'un ou plusieurs acides dicarboxyliques différents contenant de 4 à 36 atomes de carbone, d'un ou plusieurs glycols différents contenant de 3 à 12 atomes de carbone ou d'un mélange d'un ou plusieurs desdits acides dicarboxyliques différents et d'un ou plusieurs desdits glycols différents.

10. Procédé selon la revendication 9, dans lequel ledit poly(téréphtalate d'éthylène) est modifié avec jusqu'à 10 % en moles d'un ou plusieurs glycols différents, d'un ou plusieurs acides dicarboxyliques différents ou d'un de leurs mélanges choisis dans le groupe constitué de l'acide isophtalique, de l'acide adipique, de l'acide glutarique, de l'acide azélaique, de l'acide sébacique, de l'acide fumarique, de l'acide stilbènecarboxylique, de l'acide biphényldicarboxylique, de l'acide naphtalènedicarboxylique, du 1,4-butanediol, du 1,6-hexanediol, du 2,2-diméthyl-1,3-propanediol ou du 1,4-cyclohexanediméthanol; et ledit poly(2,6-naphtalènedicarboxylate d'éthylène) est modifié avec jusqu'à 10 % en moles d'un ou plusieurs glycols différents, d'un ou plusieurs acides dicarboxyliques différents ou d'un de leurs mélanges choisis dans le groupe constitué de l'acide téréphtalique, de l'acide isophtalique, de l'acide adipique, de l'acide glutarique, de l'acide azélaïque, de l'acide sébacique, de l'acide fumarique, de l'acide stilbènedicarboxylique, du 1,4-butanediol, du 1,6-hexanediol, du 2,2-diméthyl-1,3-propanediol et du 1,4-cyclohexanediméthanol.

11. Procédé selon la revendication 1, dans lequel ladite opération visant à conférer l'état solide est mise en oeuvre à une température d'au moins 150°C pendant au moins 4 heures de sorte que la viscosité inhérente du poly(téréphtalate d'éthylène) ou du poly(naphtalènedicarboxylate d'éthylène) est accrue d'au moins 5 %.

12. Procédé selon la revendication 1, dans lequel ladite opération visant à conférer l'état solide est mise en oeuvre à une température d'au moins 210°C à 250°C pendant 4 heures à 12 heures de sorte que la viscosité inhérente du poly(téréphtalate d'éthylène) ou du poly(naphtalènedicarboxylate d'éthylène) est accrue d'au moins 10 %.

13. Procédé selon la revendication 1, dans lequel ladite opération visant à conférer l'état solide est mise en oeuvre à une température comprise entre 215°C et 230°C.

14. Procédé selon la revendication 1, dans lequel ledit stabilisateur phosphoreux est un phosphite, un diphosphite, un phosphonate ou un phosphate.

15. Procédé selon la revendication 1, dans lequel ledit stabilisateur phosphoreux est un diphosphite de pentaérythritol.

16. Procédé selon la revendication 1, dans lequel ledit stabilisateur phosphoreux est le diphosphite de bis(2,4-di-t-butylphényl)pentaérythritol, le diphosphite de distéarylpentaérythritol ou un de leurs mélanges.
